**Europäisches Patentamt**

**European Patent Office**

**Office européen des brevets**

(11) Veröffentlichungsnummer: **0 290 882 B1**

(12) **EUROPÄISCHE PATENTSCHRIFT**

(45) Veröffentlichungstag der Patentschrift: **26.08.92**

(21) Anmeldenummer: **88106869.6**

(22) Anmeldetag: **29.04.88**

(51) Int. Cl.⁵: **G11B 7/09**

(54) **Gerät zur Wiedergabe von Daten.**

(30) Priorität: **09.05.87 DE 3715491**

(43) Veröffentlichungstag der Anmeldung:
**17.11.88 Patentblatt 88/46**

(45) Bekanntmachung des Hinweises auf die
Patenterteilung:
**26.08.92 Patentblatt 92/35**

(84) Benannte Vertragsstaaten:
**AT BE CH DE ES FR GB IT LI LU NL SE**

(56) Entgegenhaltungen:
**EP-A- 0 190 438**

**PATENT ABSTRACTS OF JAPAN, Band 10, Nr. 188 (P-473)[2244], 3. Juli 1986, Seite 44 P 473 & JP-A-61 32 228 (SONY CORP.) 14-02-1986**

**PATENT ABSTRACTS OF JAPAN, Band 8, Nr. 97 (P-272)[1534], 8. Mai 1984, Seite 13 P 272 & JP-A-59 8144 (TRIO K.K.) 17-01-1984**

**PATENT ABSTRACTS OF JAPAN, Band 7, Nr. 234 (P-230)[1379], 18. Oktober 1983, Seite 4 P 230 & JP-A-58 121 139 (OLYMPUS KOGAKU KOGYO K.K.) 19-07-1983**

**PATENT ABSTRACTS OF JAPAN, Band 7, Nr. 138 (P-204)[1283], 16. Juni 1983 & JP-A-58 53 030 (MITSUBISHI DENKI K.K.) 29-03-1983**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Gleim, Günter**
**Oberer Sonnenbühl 22**
**W-7730 VS-Villingen 22(DE)**

## Beschreibung

Die Erfindung betrifft ein Gerät zur Wiedergabe von Daten, die mittels einer optischen Abtastvorrichtung aus den Datenspuren eines Aufzeichnungsträgers lesbar sind, indem mindestens ein Lichtstrahl auf den Aufzeichnungsträger mittels eines Fokusregelkreises fokussierbar und mittels eines Spurregelkreises auf den Datenspuren führbar ist, indem der Lichtstrahl vom Aufzeichnungsträger auf einen Photodetektor reflektiert wird, mittels dem ein elektrisches Datensignal, ein Fokusfehlersignal als Istwert für den Fokusregelkreis und ein Spurfehlersignal als Istwert für den Spurregelkreis erzeugt werden.

Derartige Geräte, z.B. CD-Spieler, magneto-optische Geräte zur Wiedergabe und Aufzeichnung, Aufzeichnungs- und Wiedergabegeräte für Draw-Discs oder Videoplattenspieler, sind mit einer optischen Abtastvorrichtung, bestehend aus einer Laserdiode, mehreren Linsen, einem Prismenstrahlteiler und einem Photodetektor ausgestattet. Aufbau und Funktion einer optischen Abtastvorrichtung, eines sogenannten optical pick-ups, sind in Electronic components & applications, Vol. 6, No. 4, 1984 auf Seite 209-215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird der Istwert für den Fokusregelkreis als focusing error bezeichnet, während für den Istwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadruch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl in radialer Richtung z.B um einen vorgebbaren kleinen Winkel kippbar, so daß der Lichtstrahl allein durch diese Kippbewegung ein kleines Stück entlang einem Radius der CD-Platte fahren kann.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte auch eine präzise Führung entlang den Datenspuren der Platte erforderlich.

Der Regelverstärker des Fokusregelkreises ist aber wie jeder andere Regelverstärker auch mit einer Off-Set-Spannung behaftet, deren Größe einerseits von der Temperatur abhängt und andererseits einer langfristigen Drift unterliegt. Die Drift der Off-Set-Spannung und auch anderer Parameter eines Verstärkers im Laufe der Zeit werden durch Alterung des Verstärkers verursacht.

Damit die Datenwiedergabe nicht durch die Off-Set-Spannung des Regelverstärkers des Fokusregelkreises gestört wird, ist eine Kompensation der Off-Set-Spannung nötig. Durch Einstellen eines im Regelkreis vorgesehenen Abgleichpotentiometers von Hand läßt sich jedoch eine Kompensation nur näherungsweise durchführen, weil Änderungen der Off-Set-Spannung infolge Temperaturschwankungen und infolge Alterung des Regelverstärkers unberücksichtigt bleiben.

Aus der JP-A 61 32228 ist es bekannt, in einem Spurregelkreis eines optischen Wiedergabegerätes das Spurfehlersignal bei einer Vertiefung, auch gap oder groove genannt, und bei einer Erhöhung, auch land genannt, zu speichern. Die beiden gespeicherten Werte des Spurfehlersignals werden in einem Differenzverstärker voneinander subtrahiert, an dessen Ausgang deshalb ein offsetfreies Spurfehlersignal abnehmbar ist.

Um den Offset im Fokusregelkreis eines optischen Wiedergabegerätes zu kompensieren, wird gemäß JA-P-598144 die Lichtquelle moduliert, deren Lichtstrahl die Daten vom Aufzeichnungsträger liest. Die durch Modulation der Lichtquelle verursachten Modulationsanteile im Datensignal werden detektiert. Eine Offsetkompensationsspannung wird in den Fokusregelkreis eingespeist und so lange verändert, bis die Modulationsanteile im Datensignal null werden.

Es ist nun Aufgabe der Erfindung, ein Gerät zur Datenwiedergabe gemäß Oberbegriff des Anspruchs 1 so zu gestalten, daß die Offsetspannung des Regelverstärkers im Fokusregelkreis automatisch während des Betriebs kompensiert wird.

Die Erfindung löst diese Aufgabe mit den im Anspruch 1 angegebenen Merkmalen.

Es zeigen

Figur 1     einen Photodetektor eines CD-Spielers;

Figur 2     ein Ausführungsbeispiel eines erfindungsgemäßen CD-Spielers.

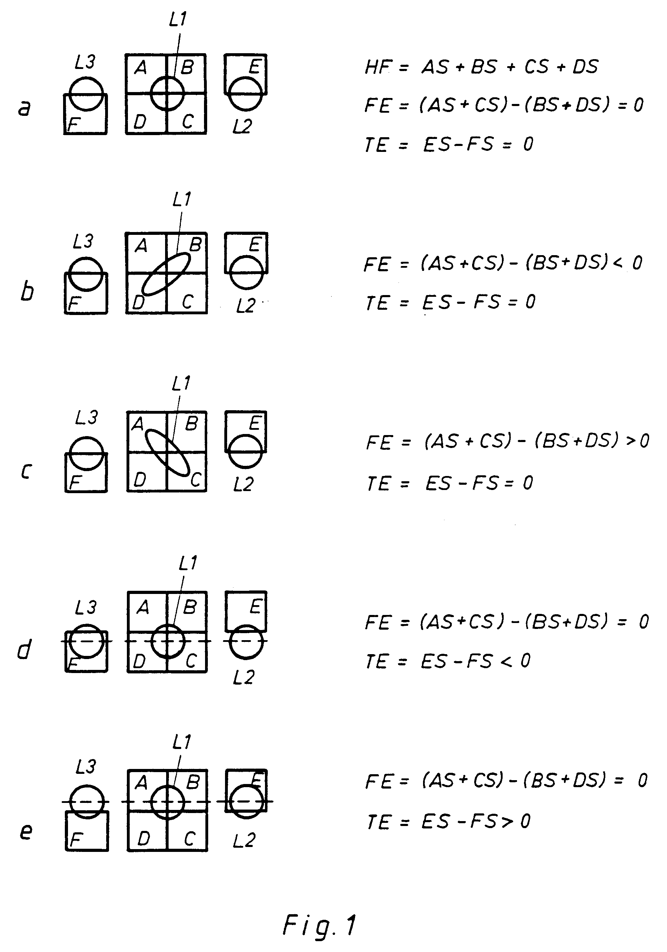

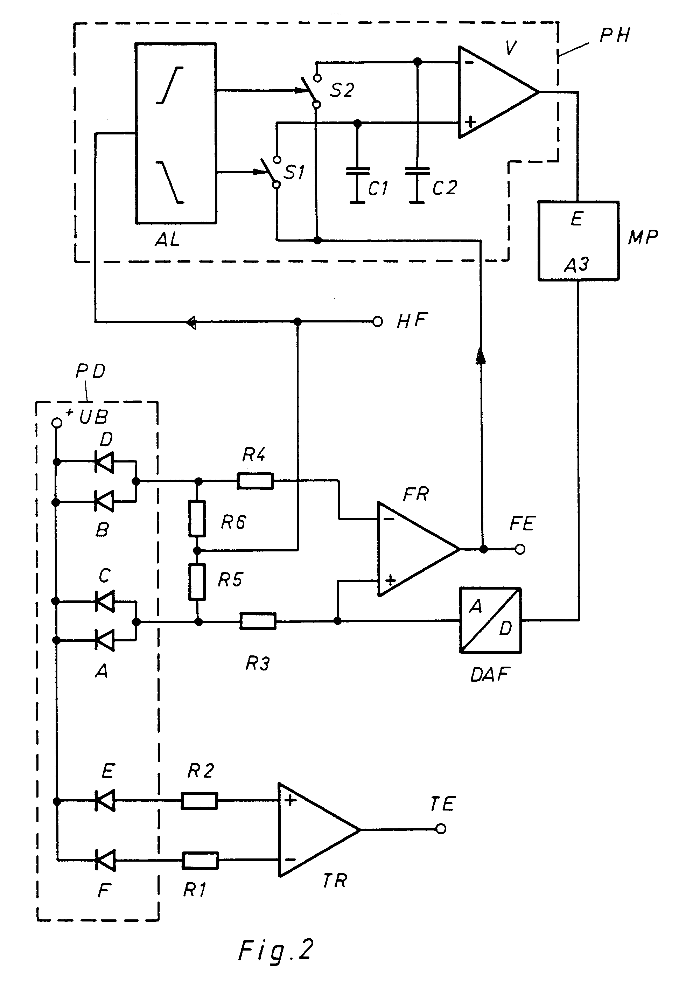

Anhand der Figuren 1 und 2 wird die Erfindung beschrieben und erläutert.

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Eine derartige Abtastvorrichtung wird in der eingangs genannten Literaturstelle Three-Beam-Pick-Up genannt.

Beim Photodetektor PD sind vier quadratförmige Photodioden A, B, C und D so zusammengefügt, daß sie wiederum ein Quadrat bilden. Bezüglich dieses aus den vier Photodioden A, B, C und D gebildeten Quadrates liegen sich zwei weitere ebenfalls quadratförmige Photodioden E und F diagonal gegenüber.

Der mittlere Laserstrahl L1, der auf die vier Photodioden A, B, C und D fokussiert wird, erzeugt das Datensignal HF = AS + BS + CS + DS und das Fokusfehlersignal FE = (AS + CS) - (BS + DS). Die beiden äußeren Lichtstrahlen L2 und L3, von denen der vordere L2 auf die Photodiode E, der hintere L3 auf die Photodiode F fällt, erzeugen das Spurfehlersignal TE = ES - FS. Mit AS, BS, CS, DS, ES und FS sind jeweils die Photospannungen der Dioden A, B, C, D, E und F bezeichnet. Weil in der optischen Abtastvorrichtung im Strahlengang des mittleren Laserstrahls L1 eine astigmatisch wirkende Kollimatorlinse vorgesehen ist, ist der mittlere Laserstrahl L1 bei genauer Fokussierung auf dem großen Quadrat, das aus den Photodioden A, B, C und D gebildet wird, kreisförmig, während er bei Defokussierung Ellipsenform annimmt.

Figur 1a zeigt den Fall der Fokussierung und der genauen Spurführung, auf die später noch eingegangen wird. Weil der vom Laserstrahl L1 auf dem großen Quadrat gebildete Lichtfleck Kreisform hat, ergibt sich das Fokusfehlersignal zu FE = (AS + CS) - (BS + DS) = 0. Am Wert null des Fokusfehlersignal FE erkennt der Fokusregelkreis, daß genau fokussiert ist.

In Figur 1b ist nun der eine Fall der Defokussierung, daß die CD-Platte zu weit von der Objektivlinse entfernt ist, dargestellt. Das Fokusfehlersignal FE ist negativ: FE = (AS + CS) - (BS + DS) > 0. Am negativen Wert des Fokusfehlersignals FE erkennt der Fokusregelkreis, daß der Abstand zwischen der CD-Platte und der Objektivlinse zu groß ist. Deshalb wird die Objektivlinse vom Stellglied des Fokusregelkreises so weit auf die CD-Platte zubewegt, bis das Fokusfehlersignal FE zu null wird.

Den anderen Fall der Defokussierung, daß die Objektivlinse zu nahe an der CD-Platte liegt, ist in Figur 1b gezeigt. Das Fokusfehlersignal FE hat einen positiven Wert: FE = (AS + CS) - (BS + DS) > 0. Am positiven Wert des Fokusfehlersignals FE erkennt der Fokusregelkreis, daß die Objektivlinse zu nahe an der CD-Platte liegt. Die Objektivlinse wird daher vom Stellglied so weit von der CD-Platte wegbewegt, bis das Fokusfehlersignal FE zu null wird.

Es wird nun erläutert, wie die Spurführung mittels des Spurregelkreises erfolgt.

In den Figuren 1a, 1b und 1c folgen die Laserstrahlen L1, L2 und L3 genau der Spur. Das Spurfehlersignal TE hat den Wert null. TE = ES - FS = 0.

In der Figur 1d ist der Fall dargestellt, daß die Laserstrahlen L1, L2 und L3 nach rechts von der Spur verschoben sind. Das Spurfehlersignal TE nimmt einen negativen Wert an: TE = ES - FS < 0. Das Stellglied des Spurregelkreises bewegt die optische Abtastvorrichtung nun so weit nach links, bis das Spurfehlersignal TE null wird.

Im entgegengesetzten Fall, wenn die Laserstrahlen nach links von der Spur verschoben sind, ist das Spurfehlersignal positiv: TE = ES - FS > 0. Nun bewegt das Stellglied des Spurregelkreises die optische Abtastvorrichtung so weit nach rechts, bis das Spurfehlersignal TE null wird.

Anhand der Figur 2 wird zuerst der Aufbau eines Ausführungsbeispieles der Erfindung beschrieben und anschließend seine Funktion erläutert.

In der Figur 2 liegt an den miteinander verbundenen Kathoden der sechs Photodioden A, B, C, D, E und F des Photodetektors PD eine Spannung + UB. Die Anode der Photodiode F ist über einen Widerstand R1 mit dem invertierenden Eingang des Regelverstärkers TR des Spurregelkreises verbunden. Die Anode der Photodiode E ist über einen Widerstand R2 mit dem nichtinvertierenden Eingang des Regelverstärkers TR des Spurregelkreises verbunden. Die miteinander verbundenen Anoden der Photodioden A und C sind über einen Widerstand R3 mit dem nichtinvertierenden Eingang des Regelverstärkers FR des Fokusregelkreises verbunden. Die ebenfalls miteinander verbundenen Anoden der Dioden B und D sind über einen Widerstand R4 mit dem invertierenden Eingang des Regelverstärkers FR des Fokusregelkreises verbunden. Zwischen den miteinander verbundenen Anoden der Dioden A und C und den miteinander verbundenen Anoden der Dioden B und D liegt eine Reihenschaltung aus zwei Widerständen R5 und R6, deren gemeinsamer Verbindungspunkt mit dem Eingang eines Analogschalters AL verbunden ist. Der Ausgang des Regelverstärkers FR des Fokusregelkreises ist mit dem einen Kontakt eines steuerbaren Schalters S1 und eines steuerbaren Schalters S2 verbunden. Der andere Kontakt des steuerbaren Schalters S1 ist mit dem nichtinvertierenden Eingang eines Verstärkers V und mit dem einen Anschluß einer Kapazität C1 verbunden, deren anderer Anschluß auf Bezugspotential liegt. Der andere Kontakt des steuerbaren Schalters S2 ist mit dem invertierenden Eingang des Verstärkers V und mit dem einen Anschluß einer Kapazität C2 verbunden, deren anderer Anschluß ebenfalls auf Bezugspotential liegt. Derjenige Ausgang des Analogschalters AL, der bei einer fallenden Flanke am Eingang einen Impuls abgibt, ist mit dem Steuereingang des steuerbaren Schalters S1 verbunden, dagegen ist der derjenige Ausgang des Analogschalters AL, der bei einer steigenden Flanke am Eingang einen Impuls abgibt, mit dem Steuereingang des steuerbaren Schalters S2 verbunden. Der Ausgang des Verstärkers V ist mit dem Eingang E1 eines Mikroprozessors MP verbunden, dessen Ausgang A3 mit dem Eingang eines Digital-Analog-Wandlers DAF verbunden ist. Der nichtinvertierende Eingang des Regelverstärkers FR des Fokusregelkreises ist mit dem Ausgang des Digital-Analog-Wandlers DAF verbunden. Am Ausgang des Regelverstärkers FR des Fokusregelkreises ist das Fokusfehlersignal FE, am Ausgang des Regelverstärkers TR des Spurregelkreises das Spurfehlersignal TE und am gemeinsamen Verbindungspunkt der beiden Widerstände R5 und R6 das Datensignal HF abgreifbar.

Es wird nun die Funktion des in Figur 2 abgebildeten Ausführungsbeispieles erläutert.

Der Analogschalter AL, die steuerbaren Schalter S1 und S2, die Kapazitäten C1 und C2 sowie der Verstärker V bilden einen Phasenvergleicher PH, in dem die Phase des Datensignales HF mit der des Fokusfehlersignals FE verglichen wird. Das Signal am Ausgang des Verstärkers V zeigt dem Mikroprozessor MP an, ob das Datensignal HF mit dem Fokusfehlersignal FE in Phase ist. Der Wert, den der Mikroprozessor MP an seinem Ausgang A3 abgibt, wird mittels des Digital-Analog-Wandlers DAF in eine analoge Spannung umgewandelt, die als Off-Set-Kompensationsspannung an den nichtinvertierenden Eingang des Regelverstärkers FR gelegt wird. Der Mikroprozessor ändert nun den Wert an seinem Ausgang A3 so lange, bis der Verstärker V anzeigt, daß das Datensignal HF und das Fokusfehlersignal FE in Phase sind. Dieser Wert wird beibehalten, durch den Digital-Analog-Wandler DAF in eine analoge Spannung umgewandelt, die als Off-Set-Kompensationsspannung die Off-Set-Spannung des Regelverstärkers FR kompensiert.

Ändert sich die Off-Set-Spannung z.B. durch Temperaturschwankungen, so bewirkt der Mikroprozessor MP sofort die nötige Korrektur der Off-Set-Kompensationsspannung. Es wird deshalb während der CD-Spieler in Betrieb ist, die Off-Set-Kompensationsspannung ständig überprüft und entsprechend den Schwankungen der Off-Set-Spannung laufend korrigiert.

Es wird nun erklärt, wie der Phasenvergleicher PH arbeitet.

Am Eingang des Phasenvergleichers PH, dem Eingang des Analogschalters AL, liegt das Datensignal HF. Bei jeder fallenden Flanke des Datensignals HF schließt der Analogschalter AL kurzzeitig den steuerbaren Schalter S1, so daß die Kapazität C1 auf den Wert aufgeladen wird, den das Fokusfehlersignal FE zum Zeitpunkt einer fallenden Flanke des Datensignals HF annimmt.

Bei jeder steigenden Flanke des Datensignals HF schließt der Analogschalter AL dagegen kurzzeitig den steuerbaren Schalter S2, so daß die Kapazität C2 auf den Wert aufgeladen wird, den das Fokusfehlersignal FE zum Zeitpunkt einer steigenden Flanke des Datensignals HF annimmt. Weil das Datensignal HF ebenso wie das Fokusfehlersignal FE aus den Photospannungen AS, BS, CS und DS der vier Photodioden A, B, C und D gebildet wird, auf die der die Daten abtastende Laserstrahl L1 von der CD-Platte reflektiert wird, sind diese beiden Signale im Idealfall, d.h. ohne Off-Set-Spannung am Regelverstärker FR, in Phase. Bei gleicher Phasenlage aber hat das Fokusfehlersignal FE zum Zeitpunkt einer fallenden Flanke des Datensignals HF den gleichen Wert, wie zum Zeitpunkt einer steigenden Flanke des Datensignals, denn die Flanken stellen die Nulldurchgänge des Datensignals HF dar.

Ist dagegen der Regelverstärker FR mit einer Off-Set-Spannung behaftet, so fallen die Nulldurchgänge des Datensignals HF nicht mehr mit den Nulldurchgängen des Fokusfehlersignales FE zusammen. Deshalb hat das Fokusfehlersignal FE zu den Zeitpunkten steigender und fallender Flanken des Datensignals nicht mehr gleiche, sondern unterschiedliche Werte. Der Mikroprozessor MP erkennt daher, wie bereits erwähnt, am Ausgangssignal des Verstärkers V, ob das Fokusfehlersignal FE und das Datensignal HF in Phase sind. Ist dies der Fall, so liegt die richtige Off-Set-Kompensationsspannung am nichtinvertierenden Eingang des Regelverstärkers FR. Andernfalls ändert der Mikroprozessor MP den Wert an seinem Ausgang A3 so lange, bis sich die Off-Set-Kompensationsspannung am Ausgang des Digital-Analog-Wandlers DAF auf den richtigen Wert eingestellt hat.

**Patentansprüche**

1. Gerät zur Wiedergabe von Daten, die mittels einer optischen Abtastvorrichtung aus den Datenspuren eines Aufzeichnungsträgers lesbar sind, indem mindestens ein Lichtstrahl auf den Aufzeichnungsträger mittels eines Fokusregelkreises fokussierbar und mittels eines Spurregelkreises entlang den Datenspuren führbar ist, indem der Lichtstrahl vom Aufzeichnungsträger auf einen Photodetektor (PD) reflektiert wird, mittels dem ein digitales elektrisches Datensignal (HF), ein Fokusfehlersignal (FE) für den Fokusregelkreis und ein Spurfehlersignal (TE) für den Spurregelkreis erzeugt werden, und indem de Wert des Fokusfehlersignals (FE) bei verschiedenen Zuständen des digitalen Datensignals (HF) verglichen wird, **dadurch gekennzeichnet,** daß zur Kompensation der Offsetspannung des Regelverstärkers (FR) des Fokusregelkreises eine am Eingang des Regelverstärkers (FR) liegende Offsetkompensationsspannung so lange verändert wird, bin der Wert, den das Fokusfehlersignal (FE) bei fallender Flanke des Datensignals (HF) annimmt, mit, dem Wert übereinstimmt, den das Fokusfehlersignal (FE) bei steigender Flanke des Datensignals (HF) annimmt.

2. Gerät nach Anspruch 1, **dadurch gekennzeichnet,** daß das Datensignal (HF) dem einen Eingang und das Fokusfehlersignal (FE) dem anderen Eingang einer Vergleichsschaltung (PH) zugeführt wird, deren Ausgang mit dem Eingang (E1) eines Mikroprozessors (MP) verbunden ist, und daß der Ausgang (A3) des Mikroprozessors (MP) mit dem Eingang eines Digital-Analog-Wandlers (DAF) verbunden ist, dessen Ausgang mit einem Eingang des Regelverstärkers (FR) des Fokusregelkreises verbunden ist.

3. Gerät nach Anspruch 2, **dadurch gekennzeichnet**, daß derjenige Ausgang des Photodetektors (PD), an dem das Datensignal (HF) abgreifbar ist, mit dem Eingang eines Analogschalters (AL) verbunden ist, dessen auf eine fallende Flanke reagierender Ausgang mit dem Steuereingang eines ersten steuerbaren Schalters (S1) verbunden ist und dessen auf eine steigende Flanke reagierender Ausgang mit dem Steuereingang eines zweiten steuerbaren Schalters (S2) verbunden ist, daß der eine Kontakt der beiden steuerbaren Schalter (S1, S2) mit dem Ausgang des Regelverstärkers (FR) des Fokusregelkreises verbunden ist, daß der andere Kontakt des ersten steuerbaren Schalters (S1) mit dem nichtinvertierenden Eingang eines Verstärkers (V) verbunden ist und über eine Kapazität (C1) auf Bezugspotential liegt, daß der andere Kontakt des zweiten steuerbaren Schalters (S2) mit dem invertierenden Eingang des Verstärkers (V) verbunden ist und über eine Kapazität (C2) auf Bezugspotential liegt und daß der Ausgang des Verstärkers (V) mit dem Eingang (E1) des Mikroprozessors (MP) verbunden ist.

**Claims**

1. A device for reproducing data readable with the aid of an optical scanning device from the data tracks of a recording carrier, wherein at least one light beam can be focused on to the recording carrier with the aid of a focus control circuit and can be guided with the aid of a track control circuit along the data tracks, wherein the light beam is reflected from the recording carrier on to a photo detector (PD), with the aid of which a digital electrical data signal (HF), a focus error signal (FE) for the focus control circuit and a track error signal (TE) for the track control circuit are produced and wherein the value of the focus error signal (FE) is compared under different conditions of the digital data signal (HF), **characterised in that** in order to compensate the offset voltage of the control amplifier (FR) of the focus control circuit an offset compensation voltge lying at the input of the control amplifier (FR) is changed until the value which the focus error signal (FE) assumes with a falling flank of the data signal (HF) agrees with the value which the focus error signal (FE) assumes with a rising flank of the data signal (FH).

2. A device according to claim 1, **characterised in that** the data signal (HF) is supplied to one input and the focus error signal (FE) is supplied to the other input of a comparison circuit (PH), its output being connected to the input (E1) of a microprocessor (MP), and that the output (A3) of the microprocessor (MP) is connected to the input of a digital/analogue converter (DAF), its output being connected to an input of the control amplifier (FR) of the focus control circuit.

3. A device according to claim 2, **characterised in that** the output of the photo detector (PD), at which the data signal (HF) can be tapped, is connected to the input of an analogue switch (AL), whose output which reacts to a falling flank is connected to the control input of a first controllable switch (S1) and whose output reacting to a rising flank is connected to the control input of a second controllable switch (S2), that one contact of the two controllable switches (S1, S2) is connected to the output of the control amplifier (FR) of the focus control circuit, that the other contact of the first controllable switch (S1) is connected to the non-inverting input of an amplifier (V) and via a capacitance (C1) is applied to reference potential, that the other contact of the second controllable switch (S2) is connected to the inverting input of the amplifier (V) and via a capacitance (C2) is applied to reference potential and that the output of the amplifier (V) is connected to the input (E1) of the microprocessor (MP).

**Revendications**

1. Appareil pour la reproduction de données qui peuvent être lues au moyen d'un dispositif de balayage optique à partir des pistes de données d'un support d'enregistrement dans lequel au moins un faisceau lumineux peut être focalisé sur le support d'enregistrement au moyen d'un circuit de réglage de foyer et peut être guidé au moyen d'un circuit de réglage de piste le long des pistes de données, le faisceau lumineux étant réfléchi par le support d'enregistrement sur un détecteur photoélectrique (PD) au moyen duquel sont générés un signal de données électrique (HF), un signal d'erreur de foyer (FE) pour le circuit de réglage de foyer et un signal d'erreur de piste (TE) pour le circuit de réglage de piste et la valeur du signal d'erreur de foyer (FE) étant comparée pour différents états du signal numérique de données (HF), **caractérisé en ce** que, pour la compensation de la tension offset de l'amplificateur de réglage (FR) du circuit de réglage de foyer, une tension de compensation d'offset, qui se trouve à l'entrée de l'amplificateur de réglage (FR), est modifiée jusqu'à ce que la valeur que prend le signal d'erreur de foyer (FE) pour le flanc décroissant du signal de données (HF) coïncide avec la valeur que prend le signal d'erreur de foyer (FE) pour le flanc croissant du signal de données (HF),

2. Appareil selon la revendication 1, **caractérisé en ce** que le signal de données (HF) est amené à l'une des entrées et le signal d'erreur de foyer (FE) à l'autre entrée d'un circuit de comparaison (PH) dont la sortie est reliée à l'entrée (E1) d'un microprocesseur (MP) et que la sortie (A3) du microprocesseur (MP) est reliée à l'entrée d'un convertisseur numérique-analogique (DAF) dont la sortie est reliée à l'une des entrées de l'amplificateur de réglage (FR) du circuit de réglage de foyer.

3. Appareil selon la revendication 2, **caractérisé en ce** que la sortie du détecteur photoélectrique (PD), sur laquelle le signal de données (HF) peut être prélevé, est reliée à l'entrée d'un commutateur analogique (AL) dont la sortie qui réagit à un flanc décroissant est reliée à l'entrée de commande d'un premier commutateur qui peut être commandé (S1) et dont la sortie qui réagit à un flanc croissant est reliée à l'entrée de commande d'un second commutateur qui peut être commandé (S2), que l'un des contacts des deux commutateurs qui peuvent être commandés (S1, S2) est relié à la sortie de l'amplificateur de réglage (FR) du circuit de réglage de foyer, que l'autre contact du premier commutateur qui peut être commandé (S1) est relié à l'entrée directe d'un amplificateur (V) et est mis sur le potentiel de référence par un condensateur (C1), que l'autre contact du second commutateur qui peut être commandé (S2) est relié à l'entrée d'inversion de l'amplificateur (V) et est mis sur le potentiel de référence par un condensateur (C2) et que la sortie de l'amplificateur (V) est reliée à l'entrée (E1) du microprocesseur (MP).

a

$HF = AS + BS + CS + DS$

$FE = (AS + CS) - (BS + DS) = 0$

$TE = ES - FS = 0$

b

$FE = (AS + CS) - (BS + DS) < 0$

$TE = ES - FS = 0$

c

$FE = (AS + CS) - (BS + DS) > 0$

$TE = ES - FS = 0$

d

$FE = (AS + CS) - (BS + DS) = 0$

$TE = ES - FS < 0$

e

$FE = (AS + CS) - (BS + DS) = 0$

$TE = ES - FS > 0$

Fig. 1

Fig.2